# DEMANDE DE BREVET EUROPEEN

(11) **EP 2 594 733 A1**
(43) Date de publication de la demande: **22.05.2013**
(21) Numéro de dépôt: 12290331.3
(22) Date de dépôt: 05.10.2012
(51) Int. Cl.: E21B 43/00

(54) **Procédé pour optimiser l'exploitation d'un milieu souterrain au moyen d'une etude réservoir comportant une mise à l'échelle optimisée**

(30) Priorité: 17.11.2011 FR 1103498
(71) Demandeur: IFP Energies nouvelles, 92852 Rueil-Malmaison Cedex (FR)
(72) Inventeur: Preux, Christophe, 78260 Acheres (FR); La Ravalec, Mickaele, 92500 Rueil-Malmaison (FR)

(57) **Abrégé**

Procédé pour optimiser l'exploitation d'un gisement de fluide au moyen d'une étude réservoir accélérée.

On construit un modèle géologique. Puis on construit un modèle de réservoir au moyen d'une mise à l'échelle du modèle géologique. On détermine et l'on sauvegarde les liens entre les mailles du modèle géologique et la maille du modèle de réservoir dans laquelle elles sont contenues. On réalise des simulations d'écoulement au moyen d'un simulateur de réservoir, du modèle de réservoir et des liens. Puis, on réitère ces étapes sans réitérer l'étape de détermination des liens, en modifiant des paramètres de d'étude réservoir de façon à optimiser le schéma d'exploitation. Enfin, on exploite le gisement selon ce schéma d'exploitation optimisé.

## Description

La présente invention concerne le domaine de l'exploitation de gisements souterrains, tels que des gisements d'hydrocarbures, ou des sites de stockages de gaz acides.

En particulier, l'invention concerne un procédé pour optimiser l'exploitation selon un schéma de production d'un milieu souterrain contenant des fluides.

L'exploration et l'exploitation de gisements, notamment pétroliers, nécessitent d'acquérir une connaissance aussi parfaite que possible de la géologie souterraine pour fournir de façon efficace une évaluation des réserves, une modélisation de la production, ou la gestion de l'exploitation. En effet, la détermination de l'emplacement d'un puits de production ou d'un puits d'injection, la constitution de la boue de forage, les caractéristiques de complétion, le choix d'un procédé de récupération des hydrocarbures (tel que l'injection d'eau par exemple) et des paramètres nécessaires à la mise en oeuvre de ce procédé (tels que la pression d'injection, le débit de production,...) nécessitent de bien connaître le gisement. Connaître le gisement signifie notamment connaître les propriétés pétrophysiques du sous-sol en tout point de l'espace, et pouvoir y prévoir les écoulements susceptibles de s'y produire.

Pour ce faire, depuis longtemps, l'industrie pétrolière allie les mesures sur champ (in situ) aux modélisations expérimentales (réalisées au laboratoire) et/ou numériques (réalisées au moyen de logiciels). Les modélisations des gisements pétroliers constituent donc une étape technique indispensable à toute exploration ou exploitation de gisement. Ces modélisations ont pour but de fournir une description du gisement.

Afin d'exploiter au mieux les milieux souterrains, les industries pétrolières définissent des modèles permettant de mieux piloter et exploiter les champs pétroliers. La précision des simulations d'écoulement est extrêmement importante puisque que les résultats de ces simulations aident à prendre les décisions techniques et économiques relatives à l'exploitation du champ. Les modèles utilisés étant généralement incertains du fait du manque de données, de nombreuses techniques itératives sont utilisées pour quantifier ces incertitudes et/ou caler les résultats de simulation à l'historique des puits. Les modèles qui en dérivent sont alors plus fiables et peuvent être employés pour prévoir la production future du champ.

La chaîne de simulation classiquement mise en oeuvre lors d'une étude de réservoir, fait intervenir les éléments présentés ci-après.

Dans une première étape, on construit un modèle géologique. Ce modèle est une maquette numérique à trois dimensions, représentative de la distribution spatiale des propriétés pétrophysiques (par exemple, porosité, perméabilité, saturation initiale en huile) dans la formation géologique d'intérêt. Des techniques géostatistiques sont souvent appliquées pour générer les propriétés pétrophysiques dans le modèle géologique. En général, ce modèle comprend un nombre de mailles beaucoup trop important pour qu'on puisse y simuler directement les écoulements de fluides : les temps calcul requis ne sont pas gérables en pratique.

La deuxième étape, la mise à l'échelle (« upscaling »), consiste à définir un deuxième modèle, dit modèle de réservoir, à partir du modèle géologique. Le modèle de réservoir est construit sur un maillage plus grossier que le modèle géologique : il comprend un nombre plus restreint de mailles. Le processus de mise à l'échelle vise à transférer les propriétés pétrophysiques du modèle géologique vers le modèle de réservoir. Il s'agit de déterminer des propriétés équivalentes à affecter aux mailles grossières du modèle réservoir connaissant les propriétés pétrophysiques des mailles fines du modèle géologique.

La troisième étape consiste à résoudre les équations d'écoulement pour le modèle réservoir ainsi créé, à l'aide d'un simulateur d'écoulement (logiciel). On estime ainsi comment les fluides s'écoulent en fonction des propriétés pétrophysiques.

Chaque étape de l'étude réservoir nécessite de très nombreuses répétitions de la chaîne de simulation. En effet, cet enchainement de modules de simulation est répété plusieurs fois, soit dans le cadre d'une analyse de sensibilité ou d'un calage d'historique pour l'optimisation du développement d'un champ. Dans ces différents cas, le même enchainement est répété avec des paramètres différents, ces paramètres intervenant au niveau des différents modules de simulation (géostatistique, upscaling, simulation d'écoulement). L'enchainement est répété intégralement à partir du moment où un paramètre au moins est modifié. Si un paramètre varie au niveau de la construction du modèle géologique, ce sont tous les composants de l'enchainement qui sont relancés.

L'invention concerne un procédé pour optimiser l'exploitation d'un gisement, dans lequel on réalise une étude réservoir en accélérant les étapes de cette étude de réservoir. L'invention y parvient en limitant le coût de calcul demandé par l'étape de mise à l'échelle (« upscaling ») en stockant les liens géométriques qui existent entre le modèle géologique et le modèle de réservoir.

### La procédé selon l'invention

De façon générale, l'objet de l'invention concerne un procédé pour optimiser l'exploitation selon un schéma d'exploitation d'un milieu souterrain contenant un fluide, dans lequel on acquiert des mesures pétrophysiques relatives au milieu et/ou au fluide, dans lequel on réalise les étapes suivantes :
a. on construit un modèle géologique constitué d'une première grille formant un ensemble de mailles discrétisant ledit milieu, une valeur d'au moins une propriété pétrophysique étant affectée à chaque maille au moyen d'une simulation géostatistique et desdites mesures ;
b. on construit un modèle de réservoir constitué d'une seconde grille formant un ensemble de mailles discrétisant ledit milieu, chaque maille de la seconde grille contenant un ensemble de mailles de la première grille, au moyen d'une mise à l'échelle dudit modèle géologique ; caractérisé en ce que :
c. on détermine des liens entre les mailles de la première grille et la maille de la seconde grille dans laquelle elles sont contenues, et l'on met en mémoire lesdits liens ;
d. on réalise des simulations d'écoulement au moyen d'un simulateur de réservoir, dudit modèle de réservoir et desdits liens ;
e. on réitère les étapes a, b et d, sans réitérer l'étape c, en modifiant des paramètres d'au moins : ledit schéma de production, ladite simulation géostatistique, ladite mise à l'échelle, ladite simulation d'écoulement, de façon à optimiser ledit schéma d'exploitation;
g. on exploite ledit milieu souterrain selon ledit schéma d'exploitation optimisé.

D'autres caractéristiques et avantages du procédé selon l'invention, apparaîtront à la lecture de la description ci-après d'exemples non limitatifs de réalisations, en se référant aux figures annexées et décrites ci-après.

### Présentation succincte des figures

- La figure 1 illustre les étapes du procédé selon l'invention.
- La figure 2 représente un exemple de modèle géologique.
- La figure 3 est un exemple de grille grossière de modèle de réservoir, correspondant à la grille fine du modèle géologique de la figure 2.
- La figure 4 illustre la notion de liens géométriques entre les mailles des deux modèles.

### Description détaillée du procédé

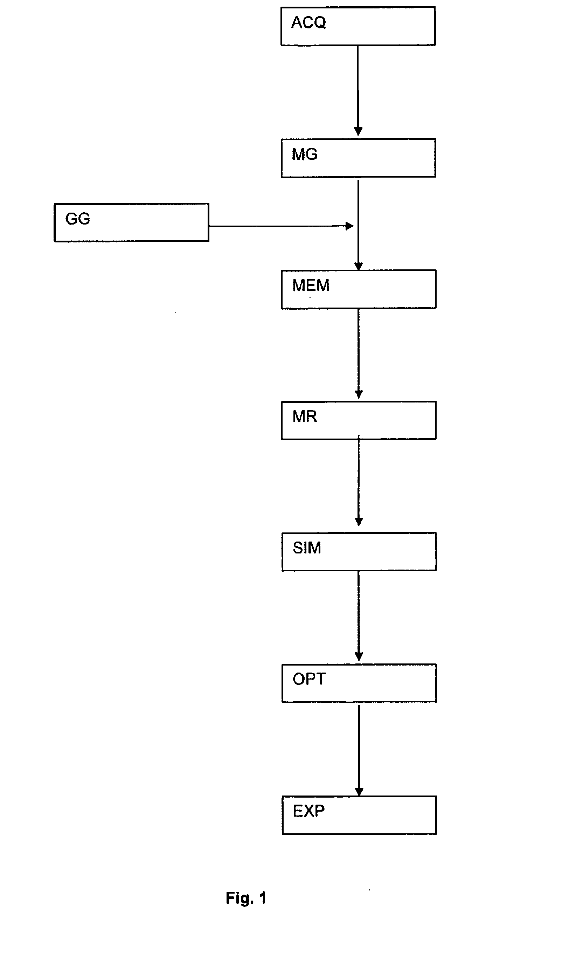

La figure 1 illustre les étapes du procédé selon l'invention, pour optimiser l'exploitation selon un schéma de production d'un milieu souterrain contenant des fluides.
1. Acquisition de mesures pétrophysiques relatives au milieu et/ou au fluide **(ACQ).**
2. Construction d'un modèle géologique **(MG).**
3. Construction d'une grille grossière **(GG).**
4. Détermination et sauvegarde de liens entre les mailles des deux grilles **(MEM).**
5. Construction d'un modèle de réservoir **(MR).**
6. Simulations d'écoulement **(SIM).**
7. Optimisation du schéma de production par itération des étapes 2, 3 et 5 **(OPT).**
8. Exploitation du milieu souterrain selon le schéma d'exploitation optimisé **(EXP).**

Un schéma de production comporte les paramètres d'exploitation technique du réservoir tels que les paramètres suivants : l'emplacement d'un puits de production ou d'un puits d'injection, la constitution de la boue de forage, les caractéristiques de complétion, le choix d'un procédé de récupération des hydrocarbures (tel que l'injection d'eau par exemple) et des paramètres nécessaires à la mise en oeuvre de ce procédé (tels que la pression d'injection, le débit de production,...).

### 1. Acquisition de mesures pétrophysiques relatives au milieu et/ou au fluide (ACQ)

Pour explorer, évaluer, exploiter un réservoir souterrain, les spécialistes réalisent des mesures directes ou indirectes, statistiques ou dynamiques de ce milieu.

On mesure directement, par exemple au moyen de diagraphies (mesures réalisées après forage, au sein même du puits) ou de carottes les paramètres statiques suivants: porosité, perméabilité, lithologie, fracturation, ...

On utilise également des campagnes sismiques pour réaliser des mesures indirectes du réservoir, en fournissant une image du sous-sol. Ces données sont statiques ou dynamiques lorsqu'elles sont répétées dans le temps.

On peut également réaliser directement des mesures de paramètres dynamiques tels que la pression dans le réservoir.

### 2. Construction d'un modèle géologique (MG)

Pour construire un modèle géologique on définit un maillage (grille) discrétisant le réservoir en un ensemble de mailles. Ce maillage est qualifié de « fin », car les mailles sont de petites dimensions, et donc nombreuses, pour représenter au mieux les hétérogénéités du réservoir. Ensuite, on associe à chaque maille de ce premier maillage une valeur d'au moins une propriété pétrophysique. Il peut s'agir de la porosité, de la perméabilité, de lithologie...

Cette affectation est réalisée au moyen d'une simulation géostatistique. Un exemple de technique pouvant être utilisée pour réaliser cette étape est décrit dans le document suivant :
- Geostatistics: modeling spatial uncertainty, Jean-Paul Chilès, Pierre Delfiner, John Wiley & Sons, Inc., 1999

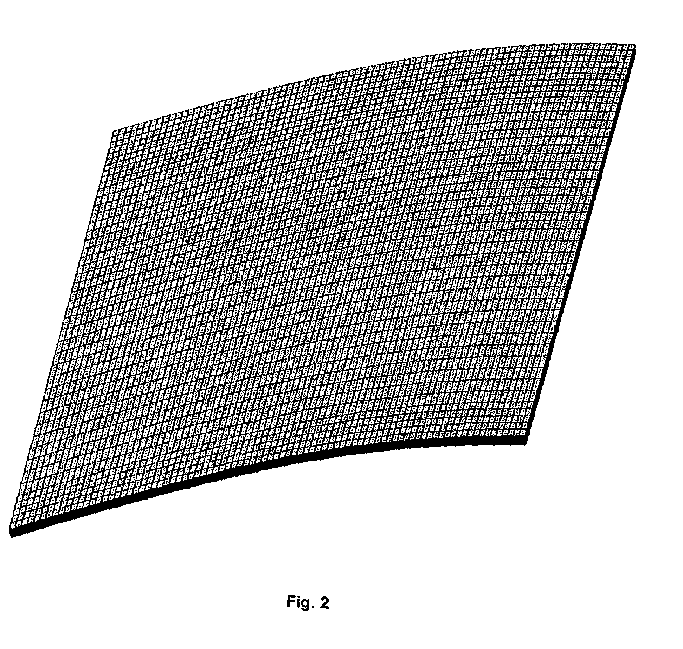

La figure 2 représente un exemple de modèle géologique.

### 3. Construction d'une grille grossière (GG)

Pour construire un modèle de réservoir, on définit un maillage (grille) discrétisant le réservoir en un ensemble de mailles, Ce maillage est qualifié de « grossier », car les mailles sont de plus grandes dimensions, et donc moins nombreuses, que celles du maillage fin.

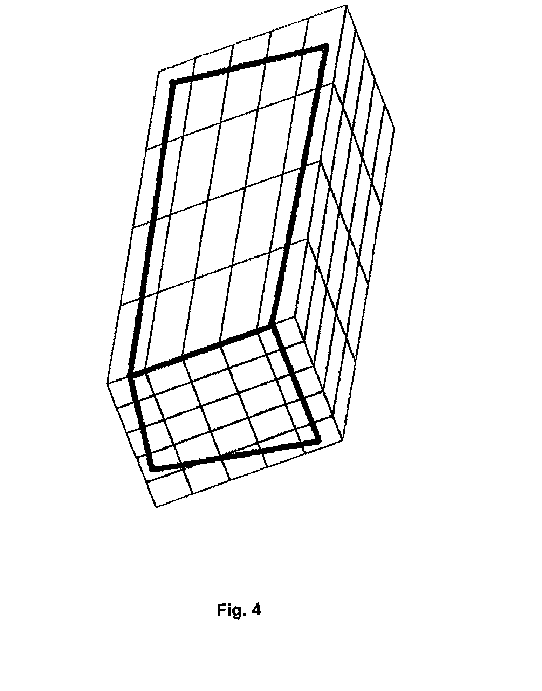

Cette seconde grille, la grille grossière (GG), forme donc un ensemble de mailles discrétisant le réservoir, chaque maille de cette seconde grille contenant un ensemble de mailles de la première grille, comme l'illustre la figure 4. Elle constitue la grille du modèle réservoir (MR).

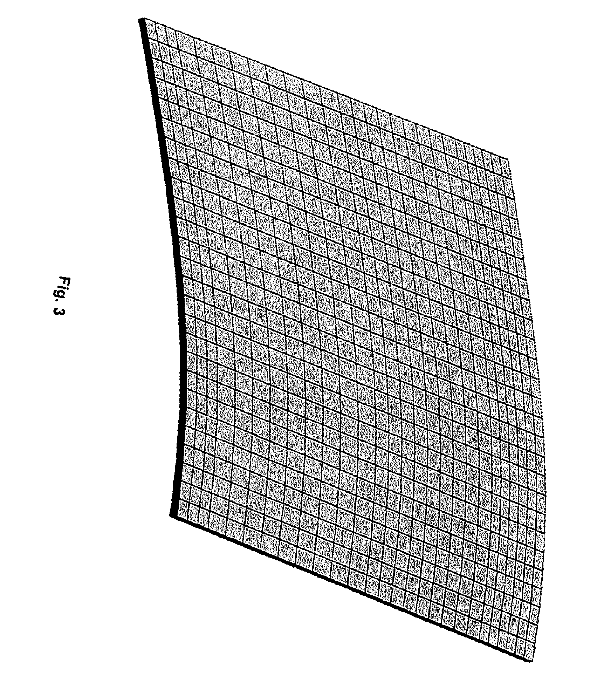

La figure 3 est un exemple de grille grossière du modèle de réservoir, correspondant à la grille fine du modèle géologique de la figure 2.

### 4. Détermination et sauvegarde de liens entre les mailles des deux grilles (MEM)

Selon l'invention, les liens géométriques entre les mailles de la grille fine du modèle géologique et les mailles de la grille grossière du modèle réservoir sont déterminés.

Un lien géométrique définit pour chaque maille de la grille du modèle géologique la maille de la grille du modèle de réservoir à laquelle elle est associée dans le modèle réservoir. La figure 4 illustre la notion de liens géométriques entre les mailles des deux modèles. Le trait épais représente une maille du modèle de réservoir, les traits fins représentent les mailles du modèle géologique. Toutes les mailles du modèle géologique contenues dans la maille en très épais possèdent un lien géométrique avec cette maille du modèle de réservoir.

La détermination de l'appartenance d'une maille de la grille fine à une maille de la grille grossière est réalisée à partir des coordonnées de chaque maille. Par exemple, on peut choisir qu'une maille de la grille fine appartient à la maille de la grille grossière qui contient le centre de cette maille de la grille fine.

Lorsque l'enchainement de simulation est répété, la géométrie des modèles reste inchangée. Les liens géométriques sont donc toujours identiques à chaque itération. L'étape de calcul de ces liens géométriques étant potentiellement coûteuse (plus coûteuse même que les calculs de mise à l'échelle des propriétés), on propose de les stocker.

Ainsi, selon l'invention, ces liens géométriques sont ensuite sauvegardés la première fois que l'enchainement de simulation est exécuté, par un stockage dans une mémoire, telle que la mémoire d'un ordinateur, dans une base de données ou dans un fichier. De ce fait, lorsque le processus est répété, ces calculs ne sont plus à faire, ce qui engendre un gain de temps substantiel.

### 5. Construction d'un modèle de réservoir (MR)

Pour construire le modèle de réservoir, on associe à chaque maille de la seconde grille (grille grossière) une valeur de la propriété pétrophysique (porosité, la perméabilité, lithologie...). Cette affectation est réalisée au moyen d'une mise à l'échelle, appelée « upscalling » : pour chaque maille de la grille grossière, on calcule une moyenne des propriétés pétrophysiques des mailles de la grille fine qui lui sont associées.

Un exemple de technique pouvant être utilisée pour réaliser cette étape est décrit dans le document suivant :
- Calculating equivalent permeability: a review, p. Renard et G. de Marsily, Advances in Water Resources 20(5-6), 253-278, 1997

### 6. Simulations d'écoulement (SIM)

A partir du modèle de réservoir et d'un logiciel appelé « simulateur d'écoulement », on réalise des simulations d'écoulement permettant de simuler des paramètres de production en fonction du schéma de production choisi. On peut, par exemple, déterminer la production attendue au fil des années.

On peut utiliser le simulateur d'écoulement PumaFlow® (IFP Energies nouvelles, France), par exemple.

Un exemple de technique pouvant être utilisée pour réaliser cette étape est décrit dans le document suivant :
- Petroleum reservoir simulation, K. Aziz et A. Settari, Applied Science Publishers, 476p, 1979

### 7. Optimisation du schéma de production par itération des étapes 2. 3. 5 et 6 (OPT)

La séquence des quatre étapes 2, 3, 5 et 6 (et éventuellement l'étape 1) est répétée de nombreuses fois pour tester différentes valeurs d'un ou plusieurs paramètres.

Ainsi, on peut modifier :
- les paramètres de la simulation géostatistique, tels que des longueurs de corrélation dans une technique de krigeage, de façon à obtenir un modèle géologique qui représente au mieux les hétérogénéités du réservoir à partir des mesures acquises à l'étape 1.
- les paramètres de la mise à l'échelle, tels que les paramètres utilisés dans la formule de prise de moyenne (exposant pour la loi puissance) ou les seuils (« cut-off »), de façon à obtenir un modèle réservoir plus précis.
- les paramètres du simulateur d'écoulement, tels que les courbes de perméabilités relatives, les courbes de pression capillaire, les contacts (eau/huile, gaz/huile), les indices de productivité des puits, de façon à mieux simuler les écoulements, et obtenir des prévisions plus proches de la réalité.

On peut également, répéter la séquence des quatre étapes 2, 3, 5 et 6 (et éventuellement l'étape 1) pour optimiser le schéma de production de développement du réservoir, en réalisant au moins l'une des opérations suivantes : une analyse de sensibilité et un calage d'historique.

Le calage d'historique consiste à modifier les paramètres du modèle réservoir, tels que les perméabilités, les porosités ou les skins de puits (représentant les endommagements autour du puits), les connections de failles... pour minimiser les écarts entre les données d'historique simulées et mesurées. Les paramètres peuvent être liés à des régions géographiques comme les perméabilités ou porosités autour d'un puits ou plusieurs puits. L'écart entre données réelles et données simulées forme une fonctionnelle, dite fonction objectif. Le problème du calage d'historique se résout en minimisant cette fonctionnelle. La fonction objectif est habituellement calculée comme la somme du carré des erreurs entre données simulées et données mesurées

L'intérêt de ne pas recalculer les liens géométriques lors de ces itérations, est d'accélérer les processus itératifs (étude de sensibilité, calage, optimisation des modèles et des stimulations d'écoulement) utilisés dans l'industrie pétrolière.

A la fin de ces étapes, le modèle géologique et le modèle réservoir sont cohérents avec les données statiques (porosité, perméabilité, sismique 3D, ...) et les données dynamiques (pression, sismiques 4D, ...). Le simulateur d'écoulement est calé, et les paramètres de l'exploitation ayant une influence sur la production sont identifiés par l'analyse de sensibilité.

En sélectionnant divers scénarios, caractérisés par exemple par diverses implantations respectives des puits injecteurs et producteurs, et en simulant la production d'hydrocarbures pour chacun d'eux selon l'étape 6, on peut sélectionner le scénario permettant d'optimiser la production du gisement fracturé considéré suivant les critères technico-économiques sélectionnés.

### 8. Exploitation du milieu souterrain selon le schéma d'exploitation optimisé. (EXP)

Les spécialistes exploitent alors le gisement selon ce scénario permettant d'optimiser la production du gisement.

### Exemple d'application

On applique le procédé selon l'invention à un cas simplifié de champ pétrolier.

On considère un modèle géologique comprenant 1390*480*45 = 30024000 mailles fines. Ce modèle est habillé en propriétés pétrophysiques à partir d'outils de simulation géostatistique. Nous disposons en outre de deux modèles réservoir :
- le modèle 1 est constitué de 139*48*9 = 60048 mailles,
- le modèle 2 est constitué de 417*144*27 = 1631296 mailles.

On crée un enchainement de modules de simulation qui sera répété plusieurs fois dans le cadre d'un calage d'historique. A chaque itération, on tente d'améliorer le calage en ajustant des paramètres du modèle géologique. On compare les temps de calcul requis pour l'étape de mise à l'échelle (« upscaling ») à la première itération et aux itérations suivantes afin de quantifier le gain en termes de temps de calcul.

| | Temps Calcul itération 1 | Temps Calcul itérations suivantes | Gain (itération 1 / itérations suivantes) |
|---|---|---|---|
| Modèle 1 | 8 minutes | 1 minute | 800% |
| Modèle 2 | 45 minutes | 6 minutes | 750% |

On remarque donc une accélération très nette de la simulation après la première itération : la mise en mémoire des liens géométriques entre les modèles permet de réduire les temps de calcul de 700 à 800 %.

Un tel gain de temps a pour effet de traiter d'importants volumes de données (plusieurs millions de mailles), que l'on rencontre pour des gisements de grandes tailles, ou des gisements très hétérogènes où la discrétisation doit être fine, et que l'on ne peut traiter dans des conditions opérationnelles avec les méthodes antérieures. Ce gain de temps permet également de tester plus de paramètres, et par conséquent d'améliorer le schéma de production, et donc la production elle-même.

## Revendications

1. Procédé pour optimiser l'exploitation selon un schéma d'exploitation d'un milieu souterrain contenant un fluide, dans lequel on acquiert des mesures pétrophysiques relatives au milieu et/ou au fluide, dans lequel on réalise les étapes suivantes :
a. on construit un modèle géologique constitué d'une première grille formant un ensemble de mailles discrétisant ledit milieu, une valeur d'au moins une propriété pétrophysique étant affectée à chaque maille au moyen d'une simulation géostatistique et desdites mesures;
b. on construit un modèle de réservoir constitué d'une seconde grille formant un ensemble de mailles discrétisant ledit milieu, chaque maille de la seconde grille contenant un ensemble de mailles de la première grille, au moyen d'une mise à l'échelle dudit modèle géologique ; **caractérisé en ce que**:
c. on détermine des liens entre les mailles de la première grille et la maille de la seconde grille dans laquelle elles sont contenues, et l'on met en mémoire lesdits liens ;
d. on réalise des simulations d'écoulement au moyen d'un simulateur de réservoir, dudit modèle de réservoir et desdits liens ;
e. on réitère les étapes a, b et d, sans réitérer l'étape c, en modifiant des paramètres d'au moins : ledit schéma de production, ladite simulation géostatistique, ladite mise à l'échelle, ladite simulation d'écoulement, de façon à optimiser ledit schéma d'exploitation ;
g. on exploite ledit milieu souterrain selon ledit schéma d'exploitation optimisé.
